# FASCICULE DE BREVET EUROPEEN

(11) **EP 2 880 434 B1**
(45) Date de publication et mention de la délivrance du brevet: **13.12.2017**
(21) Numéro de dépôt: 13756615.4
(22) Date de dépôt: 29.07.2013
(51) Int. Cl.: G01N 27/447

(54) **PROCEDE DE SEPARATION DE MOLECULES ET CELLULES BIOLOGIQUES EN SOLUTION**
VERFAHREN ZUR ABTRENNUNG VON BIOLOGISCHEN MOLEKÜLEN UND ZELLEN IN LÖSUNG
METHOD FOR SEPARATING BIOLOGICAL MOLECULES AND CELLS IN SOLUTION

(30) Priorité: 03.08.2012 FR 1257587
(43) Date de publication de la demande: 10.06.2015
(73) Titulaire: CENTRE NATIONAL DE LA RECHERCHE SCIENTIFIQUE, 75794 Paris Cedex 16 (FR)
(72) Inventeur: BANCAUD, Aurélien, F-31400 Toulouse (FR); RANCHON, Hubert, F-31400 Toulouse (FR)
(74) Mandataire: Priori, Enrico
(86) Numéro de dépôt international: PCT/FR2013/051821
(87) Numéro de publication internationale: WO 2014/020271

(56) Documents cités:
- US-A1- 2008 242 556
- ZHIGANG WU ET AL: "Microfluidic continuous particle/cell separation via electroosmotic-flow-tuned hydrodynamic spreading; Microfluidic cell separation", JOURNAL OF MICROMECHANICS & MICROENGINEERING, INSTITUTE OF PHYSICS PUBLISHING, BRISTOL, GB, vol. 17, no. 10, 1 octobre 2007 (2007-10-01), pages 1992-1999, XP020119936, ISSN: 0960-1317, DOI: 10.1088/0960-1317/17/10/010
- NEJEA I. DAVIS ET AL: "Capillary and Microfluidic Gradient Elution Isotachophoresis Coupled to Capillary Zone Electrophoresis for Femtomolar Amino Acid Detection Limits", ANALYTICAL CHEMISTRY, vol. 81, no. 13, 1 juillet 2009 (2009-07-01), pages 5452-5459, XP055061827, ISSN: 0003-2700, DOI: 10.1021/ac9006182
- AFONSO A M ET AL: "Analytical solution of mixed electro-osmotic/pressure driven flows of viscoelastic fluids in microchannels", JOURNAL OF NON-NEWTONIAN FLUID MECHANICS, ELSEVIER, NL, vol. 159, no. 1-3, 1 juin 2009 (2009-06-01), pages 50-63, XP026043218, ISSN: 0377-0257, DOI: 10.1016/J.JNNFM.2009.01.006 [extrait le 2009-02-11]

## Description

### DOMAINE DE L'INVENTION

La présente invention concerne un procédé de séparation de molécules et d'objets déformables en solution, ainsi qu'un dispositif apte à la mise en oeuvre de ce procédé.

### ARRIERE-PLAN TECHNIQUE

Les procédés de séparation en taille de biomolécules telles que les acides nucléiques et les protéines sont fondamentaux pour les activités de recherche et de diagnostic.

Classiquement, la séparation est effectuée par électrophorèse, c'est-à-dire par déplacement des molécules sous l'effet d'un champ électrique. L'électrophorèse est effectuée de manière conventionnelle dans une matrice, qui peut être un gel ou une solution de polymère.

Toutefois, l'électrophorèse sur gel traditionnelle nécessite de grandes quantités de matériel, est de longue durée, et présente une résolution limitée pour les grandes tailles de molécules (par exemple pour les molécules d'ADN de plus de 40 ou 50 kb). L'utilisation d'un champ pulsé permet d'améliorer le pouvoir résolutif pour les molécules de grande taille, mais s'effectue sur une durée encore plus considérable (supérieure à 10 heures).

L'électrophorèse mise en oeuvre dans des tubes capillaires est plus rapide et plus efficace que l'électrophorèse sur gel traditionnelle. Toutefois, l'introduction de matrices dans les tubes capillaires est problématique. La réticulation de gels *in situ* est difficilement reproductible, et l'utilisation de solutions de polymères de viscosité élevée nécessite l'application d'une pression très élevée pour le remplissage et le vidage des tubes.

Il est donc souhaitable de disposer de procédés de séparation en taille de biomolécules ne faisant appel à des matrices de séparation.

L'article intitulé « Mechanism for the séparation of large molecules based on radial migration in capillary electrophoresis », de Zheng & Yeung, dans Anal. Chem. 75:3675-3680 (2003) décrit une technique de séparation de l'ADN dans un tube capillaire de 75 µm de diamètre interne sans matrice de séparation, reposant sur le phénomène de migration radiale. Ce phénomène consiste en un déplacement des molécules d'ADN soit vers le centre du capillaire, soit vers sa périphérie, par application conjointe d'un flux hydrodynamique et d'un champ électrique, en fonction de la direction relative du flux hydrodynamique et du champ électrique. Les auteurs indiquent que la vitesse de migration radiale dépend de la taille des molécules. Ainsi, ils proposent une séparation en taille de deux molécules de 48 kb et 5 kb environ par électrophorèse combinée avec l'application cyclique d'un flux hydrodynamique de direction alternée. En revanche, l'utilisation d'un champ électrique constant et d'un flux hydrodynamique constant ne permet pas une résolution satisfaisante.

L'article intitulé « Single molecule analysis enables free solution hydrodynamic séparation using yoctomole levels of DNA », de Liu et al. dans J. Am. Chem. Soc. 133:6898-6901 (2011) décrit une séparation en taille de molécules d'ADN dans une solution sans matrice, au sein d'un tube capillaire de 2µm de diamètre interne, qui est de type purement hydrodynamique.

L'article « Free-solution oligonucleotide séparation in nanoscale channels », de Pennathur et al. dans Anal. Chem. 79:8316-8322 (2007) décrit un procédé de séparation de molécules d'ADN de petite taille (10 à 100 pb) dans des nano-canaux, sous l'effet d'un champ électrique et sans matrice de séparation. Les auteurs exposent que la migration des molécules dépend notamment des interactions de celles-ci avec la double-couche électrique, de l'encombrement stérique, et de la présence d'un marquage terminal par un groupement fluorescéine (altérant la mobilité électophorétique des molécules de petite taille).

La revue « Resoiving DNA in free solution», de Wang et al. dans Trends in Analytical Chemistry, 35:122-134 (2012) décrit un certain nombre d'approches pour la séparation en taille de l'ADN sans matrice. Outre la technique de Zheng & Yeung mentionnée ci-dessus, la revue décrit les techniques d'électrophorèse avec marquage terminal des molécules (qui impose d'attacher aux molécules d'ADN une charge à leur extrémité), de piégeage entropique, de prisme à ADN, etc. L'article intitulé « Microfluidic continuous particle / ceil séparation via electroosmotic-flow-tuned hydrodynamic spreading », de Wu et al., dans Journal of Micromechanics and Microengineering 17:1992-1999 (2007), décrit la combinaison du flux électroosmotique et de l'étalement de flux hydrodynamique pour séparer des objets dans un canal, au moyen de deux flux de liquide en entrée, les objets séparés étant collectés dans des sorties différentes du canal.

L'article intitulé « Capillary and Microfluidic Gradient Elution Isotachophoresis Coupled to Capillary Zone Electrophoresis for Femtomolar Amino Acid Détection Limits », de Davis et al., dans Anal. Chem. 81:5452-5459 (2009), décrit un mécanisme de séparation d'acides aminés dans un canal, en fonction de leurs mobilités électrophorétiques respectives. Toutefois, l'ensemble des méthodes ci-dessus présentent pour inconvénient de nécessiter une durée de séparation relativement longue, parfois d'utiliser des concentrations salines très faibles et peu conventionnelles, et plus généralement d'être complexes à mettre en oeuvre, et d'être insuffisamment résolutives sur une large plage de taille de molécules.

Il existe donc un besoin de mettre au point une méthode de séparation de molécules ou d'autres objets sans matrice de séparation, nécessitant une durée de séparation moindre, plus simple et flexible à mettre en oeuvre que les méthodes de l'état de la technique.

### RESUME DE L'INVENTION

L'invention concerne en premier lieu un procédé de séparation d'une pluralité de molécules ou d'objets déformables en milieu liquide comprenant :
- l'introduction des molécules ou des objets déformables dans un canal, le canal présentant un axe d'écoulement et une section transversale orthogonale à l'axe d'écoulement, et la dimension minimale de ladite section transversale étant inférieure ou égale à 200 µm ; et
- l'application d'un flux hydrodynamique dans le canal conjointement avec l'application d'un champ électrique dans le canal, permettant de déplacer les molécules ou les objets déformables dans le canal selon l'axe d'écoulement et de les séparer le long de l'axe d'écoulement ; le milieu liquide étant un fluide non newtonien.

Par « *objets déformables»,* on entend des molécules ou d'autres objets plus complexes, tels que des assemblages supramoléculaires ou des cellules ou des fragments de cellules, susceptibles de se déformer sous l'effet d'une contrainte mécanique telle qu'un flux hydrodynamique. De préférence la déformabilité est mesurée par le module d'Young de l'objet, qui doit être inférieur ou égal à 10⁹ Pa, ou selon des modes de réalisation inférieur ou égal à 10⁸ Pa, ou à 10⁷ Pa, ou à 10⁶ Pa, ou à 10⁵ Pa, ou à 10⁴ Pa, ou à 10³ Pa.

Le module d'Young peut être mesuré par contact mécanique, par exemple par microscopie à force atomique.

A titre d'exemple, le module d'Young de l'ADN vaut typiquement environ 300 MPa, celui de cellules de mammifères de 0,1 à 100 kPa environ.

Dans le cadre de la présente demande, sont notamment considérés comme des objets déformables : les molécules d'ADN ou d'ARN comprenant au moins 100 bases ou paires de bases (par exemple au moins 1000) ; les peptides, polypeptides ou protéines comprenant au moins 100 motifs d'acides aminés (par exemple au moins 200) ; et les cellules.

Selon un mode de réalisation, l'introduction des molécules ou objets déformables est effectuée dans une zone d'introduction du canal et le déplacement des molécules ou objets déformables est effectué de la zone d'introduction vers une zone de détection du canal, le procédé comprenant en outre :
- la détection des molécules ou objets déformables arrivant dans la zone de détection.

Selon un mode de réalisation :
- la dimension minimale du canal est inférieure ou égale à 15 µm,
   ou inférieure ou égale à 10 µm, ou inférieure ou égale à 5 µm, ou inférieure ou égale à 2 µm ; et / ou
- le rapport entre la dimension minimale de la section transversale et la dimension de la section transversale dans une direction orthogonale à celle de la dimension minimale est inférieur ou égal à 1/10, de préférence inférieur ou égal à 1/15, de manière plus particulièrement préférée inférieur ou égal à 1/20 ; et / ou
- la distance entre la zone d'introduction et la zone de détection du canal vaut de 500 µm à 20 cm, de préférence de 1 mm à 10 cm, et de manière plus particulièrement préférée de 2 mm à 1 cm.

Selon un mode de réalisation, les molécules sont choisies parmi les molécules d'acide nucléique, et notamment les molécules d'ADN simple brin, d'ADN double brin et d'ARN, les peptides, polypeptides ou protéines, les autres polymères, les glucides, les lipides, les métabolites et les composés pharmaceutiques. Les molécules sont de préférence des polymères.

Selon un mode de réalisation, les objets déformables sont choisis parmi les molécules et les cellules ; les molécules étant de préférence choisies parmi les molécules d'acide nucléique, et notamment les molécules d'ADN simple brin, d'ADN double brin et d'ARN, les peptides, polypeptides ou protéines, les glucides polymériques et les autres polymères.

Selon un mode de réalisation :
- le champ électrique appliqué vaut de 10 V/m à 10000 V/m, de préférence de 100 V/m à 5000 V/m, et de manière plus particulièrement préférée de 200 V/m à 1000 V/m ; et / ou
- le flux hydrodynamique dans le canal, et notamment entre la zone d'introduction et la zone de détection, est caractérisé par une vitesse moyenne de 1 à 10 000 µm/s, de préférence de 5 à 5 000 µm/s et de manière plus particulièrement préférée de 10 à 1 000 µm/s.

Par « *fluide newtonien»,* on entend un fluide pour lequel il existe une relation linéaire entre la contrainte mécanique imposée (force exercée sur le fluide par unité de surface) et le cisaillement du fluide (c'est-à-dire gradient de vitesse du fluide). Un « *fluide non-newtonien»* est donc un fluide qui n'est pas un fluide newtonien.

Par exemple, un fluide non-newtonien selon l'invention peut avoir un coefficient de viscosité dépendant du cisaillement (fluide stationnaire) ; ou il peut avoir un comportement élastique. Selon un mode de réalisation, le fluide est viscoélastique. Selon un mode de réalisation, le fluide présente un module de conservation en cisaillement G'(w) (tel que défini dans la partie exemples) croissant avec la fréquence w d'une vibration à laquelle est soumis le fluide. Selon un mode de réalisation, le fluide présente un module de conservation en cisaillement G'(w) supérieur au module de perte en cisaillement G"(w) (tel que défini dans la partie exemples) pour les fréquences w de vibration supérieures à un seuil w₀. Le seuil w₀ peut par exemple être compris entre 0,01 Hz et 10000 Hz, notamment entre 0,1 Hz et 1000 Hz, et à titre d'illustration entre 1 Hz et 100 Hz.

Selon un mode de réalisation, le milieu liquide présente une viscosité de 1 à 100 cP (centipoise), de préférence de 2 à 20 cP, et de manière encore plus préférée de 2 à 10 cP à température ambiante. Sauf mention contraire, les valeurs de viscosité mentionnées dans la demande sont des valeurs de viscosité statique.

Selon un mode de réalisation, le milieu liquide comprend des polymères non chargés, de préférence choisis parmi la polyvinylpyrrolidone, le poly-(éthylène glycol) le polyacrylamide et leurs mélanges, la concentration des polymères non chargés étant de préférence supérieure ou égale à la concentration critique de recouvrement (concentration à partir de laquelle les polymères sont en contact) ; la concentration massique des polymères non chargés étant de préférence de 0,1 à 10 %, plus particulièrement de 0,5 à 5 % et encore plus préférentiellement de 1 à 4 % ; et les polymères non chargés présentant de préférence une masse moléculaire moyenne de 10 à 100 000 kDa, plus particulièrement de 50 à 10 000 kDa et plus préférentiellement de 100 à 1 000 kDa.

Le terme « *non chargé* » signifie que les polymères en question ont une charge électrostatique globale essentiellement nulle dans le milieu liquide susmentionné.

La présence de tels polymères par exemple dans une solution aqueuse permet de rendre le milieu liquide non newtonien (par exemple viscoélastique).

L'invention concerne également un dispositif de séparation de molécules ou d'objets déformables en milieu liquide, comprenant :
- un canal présentant un axe d'écoulement et une section transversale orthogonale à l'axe d'écoulement, la dimension minimale de ladite section transversale étant inférieure ou égale à 200 µm ;
- des moyens d'application d'un flux hydrodynamique dans le canal ; et
- des moyens d'application d'un champ électrique dans le canal.

De préférence, le canal est rempli d'un milieu liquide non-newtonien. Selon un mode de réalisation, le milieu liquide présente une viscosité
1 à 100 cP, de préférence de 2 à 20 cP, et de manière encore plus préférée
de 2 à 10 cP à température ambiante.

Selon un mode de réalisation, le milieu liquide comprend des polymères non chargés, de préférence choisis parmi la polyvinylpyrrolidone, le poly-(éthylène glycol), le polyacrylamide et leurs mélanges, la concentration des polymères non chargés étant de préférence supérieure ou égale à la concentration critique de recouvrement ; la concentration massique des polymères non chargés étant de préférence de 0,1 à 10 %, plus particulièrement de 0,5 à 5 % et encore plus préférentiellement de 1 à 4 % ; et les polymères non chargés présentant de préférence une masse moléculaire moyenne de 10 à 100 000 kDa, plus particulièrement de 50 à 10 000 kDa et plus préférentiellement de 100 à 1 000 kDa.

Selon un mode de réalisation, le dispositif comprend :
- une pluralité de canaux (1) présentant chacun un axe d'écoulement (14) et une section transversale orthogonale à l'axe d'écoulement (14), la dimension minimale de ladite section transversale étant inférieure ou égale à 200 µm et chaque canal (1) étant rempli d'un milieu liquide non newtonien ;
- des moyens d'application d'un flux hydrodynamique (13a, 13b) dans les canaux (1) ; et
- des moyens d'application d'un champ électrique (10a, 10b) dans les canaux (1).

Selon un mode de réalisation, le canal est une lumière d'un tube capillaire ; ou la pluralité de canaux sont des lumières de tubes capillaires, de
préférence disposés en parallèles.

Selon un mode de réalisation, le dispositif comprend :
- une zone d'introduction et une zone de détection dans le canal espacées le long de l'axe d'écoulement ;
- des moyens de détection des molécules ou des objets déformables arrivant dans la zone de détection ;
et dans lequel, de préférence, la zone d'introduction du canal est formée par une intersection du canal avec un canal supplémentaire, le dispositif comprenant des moyens d'amenée des objets déformables dans le canal supplémentaire, et des moyens de déplacement des objets déformables vers l'intersection, qui comprennent de préférence des moyens d'application d'un champ électrique dans le canal supplémentaire et / ou des moyens d'application d'un flux hydrodynamique dans le canal supplémentaire.

Selon un mode de réalisation :
- la dimension minimale du canal est inférieure ou égale à 15 µm, ou inférieure ou égale à 10 µm, ou inférieure ou égale à 5 µm, ou inférieure ou égale à 2 µm ; et/ou
- le rapport entre la dimension minimale de la section transversale et la dimension de la section transversale dans une direction orthogonale à celle de la dimension minimale est inférieur ou égal
   à 1/10, de préférence inférieur ou égal à 1/15, de manière plus particulièrement préférée inférieur ou égal à 1/20 ; et/ou
- la distance entre la zone d'introduction et la zone de détection du canal vaut de 500 µm à 20 cm, de préférence de 1 mm à 10 cm, et de manière plus particulièrement préférée de 2 mm à 5 cm ou de 2 mm à 1 cm.

L'invention concerne également un système de laboratoire sur puce comprenant le dispositif de séparation décrit ci-dessus, connecté en sortie d'un dispositif de réaction chimique ou biochimique et / ou alimentant des moyens de collecte des molécules ou des objets déformables séparés.

La présente invention permet de surmonter les inconvénients de l'état de la technique. Elle fournit plus particulièrement une méthode de séparation de molécules et autres objets déformables sans matrice de séparation,
nécessitant une durée de séparation moindre, plus simple et flexible à mettre en oeuvre que les méthodes de l'état de la technique.

Ceci est accompli grâce à l'application d'un champ électrique conjointement à l'application d'un flux hydrodynamique, dans un canal de petite dimension, notamment inférieure à 25 µm.

Ces conditions permettent, en ajustant la valeur du champ électrique et la vitesse moyenne du fluide (et éventuellement les dimensions du canal), de séparer avec une bonne résolution et en peu de temps des molécules et autres objets déformables dans des gammes de tailles très variées.

Sans vouloir être liés par une théorie, les inventeurs estiment que la séparation de molécules ou autres objets déformables mise en oeuvre dans l'invention repose sur l'action combinée sur les molécules ou objets d'une force électrostatique et d'une force de cisaillement, aboutissant à une répartition différente des molécules ou objets selon la plus petite dimension du canal en fonction de leurs tailles respectives, et donc à une vitesse de déplacement de ces molécules ou objets dans le canal dépendant de leurs tailles respectives - les molécules ou objets en position relativement centrale étant soumises à une vitesse d'écoulement supérieure aux molécules ou objets en position relativement excentrée. Plus spécifiquement, il a été observé que des molécules de petite taille se déplacent plus rapidement que des molécules de grande taille jusqu'à la zone de détection, du fait que les molécules de grande taille ont une position plus excentrée que les molécules de petite taille selon la plus petite dimension du canal.

Sans vouloir être liés par une théorie, les inventeurs estiment en outre que lorsque le milieu liquide dans le canal est non newtonien, la séparation des molécules ou autres objets déformables est améliorée, en favorisant la migration transverse des molécules ou objets dépendant du cisaillement auquel ils sont soumis. Outre les caractéristiques principales de l'invention énumérées ci-dessus, le procédé et le dispositif selon l'invention peuvent en outre présenter l'une quelconque ou plusieurs des autres caractéristiques qui suivent. Selon un mode de réalisation, les molécules ou les objets déformables à séparer sont des molécules ou des objets déformables présentant une charge globale positive dans le milieu liquide utilisé pour la séparation.

Selon un mode de réalisation, les molécules ou les objets déformables à séparer sont des molécules ou des objets déformables présentant une charge globale négative dans le milieu liquide utilisé pour la séparation.

Selon un mode de réalisation, les molécules ou les objets déformables à séparer présentent une mobilité électrophorétique identique (ou essentiellement identique, par exemple à 5, 10 ou 20 % près) dans le milieu liquide utilisé pour la séparation.

Selon un mode de réalisation, le champ électrique, le flux hydrodynamique et la composition du milieu liquide de séparation sont sélectionnés et adaptés de sorte à entraîner une distribution hétérogène des molécules ou objets déformables dans la section transversale du canal, et notamment selon la direction de cette section transversale correspondant à la dimension minimale ; et plus particulièrement sont sélectionnés et adaptés de sorte à ce que la concentration de molécules ou d'objets déformables soit décroissante des parois du canal vers le centre du canal, selon la direction correspondant à la dimension minimale de la section transversale du canal.

Selon un mode de réalisation, les molécules ou objets déformables à séparer sont des biomolécules.

Les molécules ou les objets déformables soumis au procédé de l'invention comportent généralement une pluralité de (c'est-à-dire au moins deux) types de molécules ou objets déformables différents, chaque type de molécules ou objets déformables pouvant compter une seule molécule / objet déformable ou, de préférence plusieurs (et notamment un grand nombre) de molécules /objets déformables. L'invention permet de séparer les molécules selon ces types de molécules, ou les objets déformables selon ces types d'objets déformables.

Par « *type de molécules»* on entend notamment des molécules présentant un poids moléculaire ou une taille identique, ou proche (qui appartient notamment à une plage de valeurs déterminée et distincte de celle du poids moléculaire ou de la taille d'un autre type de molécules).

En particulier, lorsque les molécules sont des polymères (tels que des acides nucléiques ou des peptides, polypeptides ou protéines par exemple), par « *type de molécules»* on entend généralement l'un de ces polymères présentant une taille (c'est-à-dire un nombre d'unités monomériques, tel que nombre de bases, paires de bases, ou acides aminés) donnée ou comprise dans une gamme donnée. Dans ce cas, les différents types de molécules correspondent donc à des tailles (ou gammes de taille) distinctes.

Par « *type d'objets déformables»,* dans le contexte des cellules, on entend notamment des cellules présentant une mobilité sous l'action d'un champ électrique (ou une densité surfacique de charges) ou une taille identique, ou proche (qui appartient notamment à une plage de valeurs déterminée et distincte de celle de mobilité ou de la taille d'un autre type de cellules).

Ainsi, lorsque les objets déformables sont des cellules (telles que des fibroblastes, des ostéoblates, des cellules endothéliales ou épithéliales par exemple), par « *type de cellules»* on entend généralement des cellules présentant des propriétés de déformabilités égales ou voisines.

Selon un mode de réalisation, le champ électrique et le flux hydrodynamique sont constants lors du déplacement des molécules ou des objets déformables de la zone d'introduction vers la zone de détection. Ce mode de réalisation est particulièrement simple à mettre en oeuvre. Alternativement, il est possible de faire varier le flux hydrodynamique et / ou le champ électrique pendant le déplacement des molécules ou des objets déformables, par exemple de manière cyclique. Cela peut permettre de définir un programme affiné et particulièrement adapté pour certains types de molécules ou d'objets déformables devant être séparés.

Selon un mode de réalisation, le milieu liquide présent dans le canal est une solution dépourvue de matrice de séparation. En particulier, aucun gel n'est alors utilisé, et aucun polymère n'est présent dans le milieu liquide à l'exception le cas échéant des molécules polymériques qui font l'objet de la séparation ou d'autres polymères présentant des fonctions auxiliaires (par exemple passivation de surfaces, écrantage des interactions hydrodynamiques, polymères tels que la polyvinylpyrrolidone ou autres impartissant un caractère non newtonien souhaité au milieu liquide, etc.).

En effet, une matrice de séparation est un milieu tel qu'un gel ou une solution de polymère permettant d'opérer une séparation électrophorétique sans mise en mouvement de ladite matrice pendant l'opération de séparation, et sous l'effet uniquement d'un champ électrique.

Selon un mode de réalisation, le procédé de l'invention comprend une étape d'injection des molécules ou des objets déformables dans un dispositif de séparation comportant le canal mentionné ci-dessus. De préférence, l'étape d'injection comprend l'injection d'un échantillon liquide de volume inférieur ou égal à 1 mL, ou à 500 µL, ou à 300 µL, ou à 200 µL, ou à 150 µL.

Selon un mode de réalisation, la concentration des molécules ou des objets déformables dans le canal est de 10⁻¹⁸ à 10⁻⁸ mol/µL, ou de 10⁻¹⁸ à 10⁻¹⁰ mol/µL, ou de 10⁻¹⁷ à 10⁻¹² mol/µL, ou de 10⁻¹⁶ à 10⁻¹⁴ mol/µL.

Selon un mode de réalisation, les parois du canal présentent un revêtement adapté à réduire ou empêcher les interactions entre les molécules ou objets déformables devant être séparés et ces parois. Ce revêtement peut être greffé chimiquement aux parois ou fourni par les solutions introduites. De préférence, le revêtement est choisi parmi des polymères synthétiques comme la polyvinylpyrrolidone, le poly-(éthylène glycol), le polyacrylamide, ou des polymères biologiques comme l'albumine bovine ou d'oeuf.

Ainsi, le procédé de l'invention peut comprendre une étape préliminaire d'injection dans le canal d'une solution pour former un revêtement sur les parois du canal, suivie d'une étape de rinçage du canal.

Alternativement, on peut directement inclure les polymères fournissant le revêtement dans le milieu liquide contenant les molécules ou objets à séparer.

Autrement dit, lorsque l'on utilise un milieu liquide comprenant des polymères non chargés pour effectuer la séparation, comme mentionné ci-dessus, ces polymères non chargés peuvent également fournir la fonction d'empêchement des interactions entre les molécules ou objets devant être séparés et les parois.

La détection des molécules ou des objets déformables dans la zone de détection peut être effectuée notamment par :
- illumination de la zone de détection et détection d'un signal de fluorescence au moyen d'un photodétecteur ; ou
- illumination de la zone de détection et détection d'un signal d'absorbance à une longueur d'onde spécifique de la molécule d'intérêt ou de l'objet d'intérêt (par exemple 280 nm pour les protéines, 260 nm pour l'ADN) ; ou
- sonde électrochimique placée au niveau de la zone de détection, et détection d'une variation d'impédance au moyen d'un détecteur électrique ; ou
- détection d'une variation de signal optique lié au passage d'objets devant la zone de détection, au moyen d'un photodétecteur.

Le cas échéant, le procédé selon l'invention comporte une étape préliminaire de mise en contact des molécules ou des objets déformables avec un agent de coloration tel qu'un fluorophore.

Selon un mode de réalisation, le procédé selon l'invention comporte la détection de molécules individuelles ou des objets déformables individuels dans la zone de détection (par exemple au moyen d'un photodétecteur) à différents instants. Alternativement (ou conjointement), le procédé selon l'invention comporte la mesure d'une concentration de molécules ou d'objets déformables dans la zone de détection à différents instants.

Selon un mode de réalisation, le flux hydrodynamique est de type laminaire.

Selon un mode de réalisation, le champ électrique dans le canal a tendance à s'opposer au déplacement des molécules ou objets déformables.

Selon un mode de réalisation, le canal est dépourvu de structurations sur ses parois internes.

Selon un mode de réalisation, la section transversale du canal est constante le long de l'axe d'écoulement, et de préférence la section transversale du canal est essentiellement rectangulaire.

Selon un mode de réalisation, le canal est rectiligne selon l'axe d'écoulement. Alternativement, le canal peut comprendre des sections rectilignes connectées par des coudes, auquel cas l'axe d'écoulement est essentiellement une ligne brisée. Alternativement encore, le canal peut être courbe selon l'axe d'écoulement : par exemple l'axe d'écoulement peut être un arc de cercle, une portion de spirale...

Selon certaines variantes, le canal peut comporter un ou plusieurs embranchements.

Selon un mode de réalisation, la dimension minimale de la section transversale mentionnée ci-dessus est la hauteur du canal (selon la dimension verticale).

Selon un mode de réalisation, la hauteur du canal est inférieure ou égale à 25 µm, ou à 20 µm, ou à 15 µm, ou à 10 µm, ou à 8 µm, ou à 7 µm, ou à 6 µm, ou à 5 µm, ou à 4 µm, ou à 3 µm, ou à 2 µm, ou à 1 µm, ou à 800 nm.

Selon un mode de réalisation, la dimension de la section transversale dans une direction orthogonale est la largeur du canal.

Selon un mode de réalisation, la dimension minimale de la section transversale est choisie en fonction de la taille maximale ou de la taille moyenne des molécules ou objets déformables à séparer en milieu liquide.

Selon un mode de réalisation, cette dimension minimale est supérieure ou égale à 100 nm, ou à 200 nm, ou à 300 nm, ou à 500 nm. De préférence, le procédé de séparation selon l'invention ne repose ainsi pas sur des effets de charge significatifs au niveau des parois.

Selon un mode de réalisation, cette dimension minimale est inférieure ou égale à 200 fois, de préférence inférieure ou égale à 100 fois, ou à 50 fois, ou à 20 fois : la dimension maximale en solution du type de molécules ou d'objets déformables qui sont les plus grands parmi les molécules ou objets déformables à séparer; ou la moyenne entre la
dimension maximale en solution du type de molécules ou d'objets déformables qui sont les plus grands parmi les molécules ou objets déformables à séparer et la dimension maximale en solution du type de molécules ou d'objets déformables qui sont les plus petits parmi les molécules ou objets déformables à séparer.

Selon un mode de réalisation, cette dimension minimale est inférieure ou égale à 200 fois, de préférence inférieure ou égale à 100 fois, ou à 50 fois, ou à 20 fois : le rayon de giration du type de molécules qui sont les plus grandes parmi les molécules à séparer ; ou la moyenne entre le rayon de giration du type de molécules qui sont les plus grandes parmi les molécules à séparer et le rayon de giration du type de molécules qui sont les plus petites parmi les molécules à séparer. Le rayon de giration fournit une estimation de la dimension maximale d'une molécule en solution, lorsque celle-ci présente une conformation du type pelote.

Par exemple, pour des molécules d'ADN double brin de taille supérieure ou égale à quelques kb, dans un bon solvant, le rayon de giration vaut *A₀xN^{v},* avec N le nombre de paires de bases, *A₀* une longueur caractéristique et *v* un exposant, dépendant de la nature du solvant (environ
1/3 pour un mauvais solvant, et de 0,5 à 0,6 pour un bon solvant).

Pour des protéines, on considère généralement que le rayon de giration ou rayon hydrodynamique vaut approximativement 0,75xM^{0,33} pour des protéines globulaires et 0,19xM^{0,54} pour des protéines dénaturées,
en nm, où M désigne le poids moléculaire.

Selon un mode de réalisation, dans le cas de la séparation de cellules, la dimension minimale est inférieure ou égale à 200 fois, de préférence inférieure ou égale à 100 fois, ou à 50 fois, ou à 20 fois le diamètre moyen du type de cellules qui sont les plus grandes parmi les cellules à séparer ; ou la moyenne entre le diamètre moyen du type de cellules qui sont les plus grandes parmi les cellules à séparer et le diamètre moyen du type de cellules qui sont les plus petites parmi les cellules à séparer. En cas de cellules anisotropiques, le diamètre moyen désigne la valeur moyenne de la dimension maximale des cellules.

Selon un mode de réalisation, une partie des molécules ou objets déformables à séparer, ou toutes les molécules ou objets déformables à séparer, sont des molécules d'acide nucléique :
- comprenant un nombre de bases (ou paires de bases) inférieur ou égal à 100 ; ou
- comprenant un nombre de bases (ou paires de bases) dans une gamme de 100 à 1 000; ou
- comprenant un nombre de bases (ou paires de bases) dans une gamme de 1 000 à 10 000; ou
- comprenant un nombre de bases (ou paires de bases) dans une gamme de 10 000 à 100 000; ou
- comprenant un nombre de bases (ou paires de bases) dans une gamme de 100 000 à 1 000 000 ; ou
- comprenant un nombre de bases (ou paires de bases) dans une gamme de 1 000 000 à 10 000 000 ; ou
- comprenant un nombre de bases (ou paires de bases) dans une gamme de 10 000 000 à 100 000 000.

Selon un mode de réalisation, les molécules ou objets déformables à séparer sont des molécules d'acide nucléique comprenant plus de 1 000 bases (ou paires de bases), ou plus de 10 000 bases (ou paires de bases).

Selon un mode de réalisation, les molécules ou objets déformables à séparer sont des molécules d'acide nucléique génomique. De préférence, dans ce cas, la dimension minimale de la section transversale du canal vaut
de 5 à 25 µm, notamment de 5 à 20 µm, de préférence de 10 à 15 µm.

Selon un mode de réalisation, les molécules ou objets déformables à séparer sont des molécules d'acide nucléique comportant 50 000 bases (ou paires de bases) au plus. De préférence, dans ce cas, la dimension minimale de la section transversale du canal est inférieure ou égale à 5 µm, notamment inférieure ou égale à 3 µm ou inférieure ou égale à 2 µm.

Selon un mode de réalisation, les molécules ou objets déformables à séparer sont des protéines. De préférence, dans ce cas, la dimension minimale de la section transversale du canal est inférieure ou égale à 1 µm, et vaut notamment de 500 nm à 1 µm, par exemple de 600 nm à 800 nm.

Selon un mode de réalisation, les moyens d'application du flux hydrodynamique dans le canal comprennent deux réservoirs de liquide disposés aux extrémités respectives du canal par rapport à l'axe d'écoulement, lesdits réservoirs étant connectés à des moyens de contrôle de pression.

A titre d'exemple, on peut utiliser les moyens de contrôle de pression décrits dans le document WO 2004/103566. Alternativement, on peut utiliser un système de vannes et pompes tel que décrit dans l'article « Monolithic Microfabricated Valves and Pumps by Multilayer Soft Lithography » d'Unger et al., dans Science (2000), vol. 288, n°5463, p.113-116.

Selon un mode de réalisation, les moyens d'application du champ électrique dans le canal comprennent deux électrodes disposées aux extrémités respectives du canal par rapport à l'axe d'écoulement.

Selon un mode de réalisation, les moyens d'application du flux hydrodynamique dans le canal supplémentaire comprennent deux réservoirs de liquide disposés à des extrémités respectives du canal supplémentaire, lesdits réservoirs étant connectés à des moyens de contrôle de pression.

Selon un mode de réalisation, les moyens d'application du champ électrique dans le canal supplémentaire comprennent deux électrodes disposées à des extrémités respectives du canal supplémentaire.

Selon un mode de réalisation, le canal est intégré dans une puce microfabriquée scellée sur un support. De préférence le support est transparent. Le support peut notamment être une lame de verre. La puce microfabriquée peut notamment être en verre ou en silicium, ou en tout autre matériau (par exemple matière plastique) essentiellement non déformable. L'expression « *essentiellement non déformable* » se rapporte aux conditions de pression normalement utilisées pour l'application du flux hydrodynamique. Par exemple, une pression de référence pour la non-déformabilité peut être de 10 bar.

Alternativement, le canal peut être une lumière d'un tube capillaire. Dans ce cas, la section transversale du canal est de préférence circulaire ou carrée, et la dimension minimale de la section transversale correspond respectivement au diamètre de la section circulaire ou à la dimension d'un côté de la section carrée.

L'utilisation de tubes capillaires peut permettre un multiplexage aisé des canaux selon l'invention, sous forme de fuseaux de tubes capillaires, par exemple tels que ceux décrits dans l'article « Bundled capillary electrophoresis using microstructured fibres» de Rogers et al., Electrophoresis, 32(2):223-229 (2011). Dans ce cas, les moyens d'application du flux hydrodynamique et les moyens d'application du champ électrique peuvent être communs pour l'ensemble des tubes capillaires, ou au contraire être distincts pour tous les tubes capillaires.

Selon une forme alternative de l'invention, la dimension minimale de la section transversale du canal est inférieure ou égale à 200 µm, ou à 100 µm, ou à 75 µm, ou à 50 µm, au lieu d'être inférieure ou égale à 25 µm comme mentionné ci-dessus. L'ensemble de la présente description s'applique à cette forme alternative de l'invention *mutatis mutandis,* étant entendu que l'expression « *dimension minimale de la section transversale inférieure ou égale à 25 J.lm* » doit alors être remplacée par le lecteur par « *dimension minimale de la section transversale inférieure ou égale à 200 µm* » (ou à 100 µm, ou à 75 µm, ou à 50 µm, selon la variante considérée).

Cette forme alternative est particulièrement appropriée lorsque les objets déformables à séparer sont de grande taille, par exemple sont des cellules. De préférence, dans ce cas, la dimension minimale de la section transversale du canal est inférieure ou égale à 100 m. et vaut notamment de 10 à 75 µm, et notamment de 25 à 50 µm.

Cette forme alternative est également appropriée lorsque le milieu liquide utilisée est de viscosité élevée (afin de faciliter l'application du flux hydrodynamique, c'est-à-dire de réduire le différentiel de pression nécessaire).

Un autre objet de l'invention est un ensemble (ou kit) comprenant des objets déformables (tels que décrits ci-dessus) en association avec un dispositif de séparation desdits objets déformables en milieu liquide, le dispositif de séparation étant le dispositif décrit ci-dessus (dans ses diverses variantes et formes de réalisation). Le dispositif de séparation de cet ensemble peut comprendre le milieu liquide (adapté à la séparation) dans le canal ou les canaux ; ou bien il peut être vide (sans milieu liquide dans le ou les canaux) et être simplement destiné à recevoir ce milieu liquide (qui de préférence est non newtonien).

Un autre objet de l'invention est un ensemble (ou kit) comprenant un dispositif de séparation d'objets déformables en milieu liquide, en association avec un milieu liquide adapté à la séparation des objets déformables. Le dispositif de séparation est tel que décrit ci-dessus (dans ses diverses variantes et formes de réalisation) ; dans cet ensemble le dispositif est fourni vide (c'est-à-dire sans milieu liquide de séparation). Le milieu liquide est tel que décrit ci-dessus (dans ses diverses variantes et formes de réalisation) peut notamment être non newtonien.

Un autre objet de l'invention est l'utilisation d'un dispositif pour la séparation d'objets déformables en milieu liquide, le dispositif comprenant :
- un canal présentant un axe d'écoulement et une section transversale orthogonale à l'axe d'écoulement, la dimension minimale de ladite section transversale étant inférieure ou égale à 200 µm;
- des moyens d'application d'un flux hydrodynamique dans le canal ; et
- des moyens d'application d'un champ électrique dans le canal.

Selon des modes de réalisation de cet autre objet de l'invention, les objets déformables présentent les caractéristiques décrites ci-dessus en relation avec les objets précédents de l'invention ; et / ou le dispositif de séparation présente les caractéristiques décrites ci-dessus en relation avec les objets précédents de l'invention ; et / ou le milieu liquide présente les caractéristiques décrites ci-dessus en relation avec les objets précédents de l'invention (et notamment est non newtonien).

### BREVE DESCRIPTION DES FIGURES

La **figure 1** représente de manière schématique un mode de réalisation d'un dispositif selon l'invention, en vue de dessus.
La **figure 2** représente de manière schématique la coupe transversale A-A (agrandie) du dispositif ci-dessus.
La **figure 3** est une illustration schématique des champs de force hydrodynamique et électrophorétique dans le canal lors de la séparation.
La **figure 4** représente des résultats de séparation de molécules d'ADN allant de 500 à 10000 pb en utilisant le procédé de l'invention, pour diverses conditions de champ électrique et flux hydrodynamique (voir l'exemple 1 ci-dessous). En abscisse est représentée la durée depuis le début de la migration (en minutes), et en ordonnée est représentée l'intensité lumineuse reçue par le détecteur. Une séparation de la population d'ADN testée par électrophorèse sur gel traditionnelle est également représentée en bas à gauche pour comparaison.
La **figure 5** représente plus en détail trois des séparations présentées

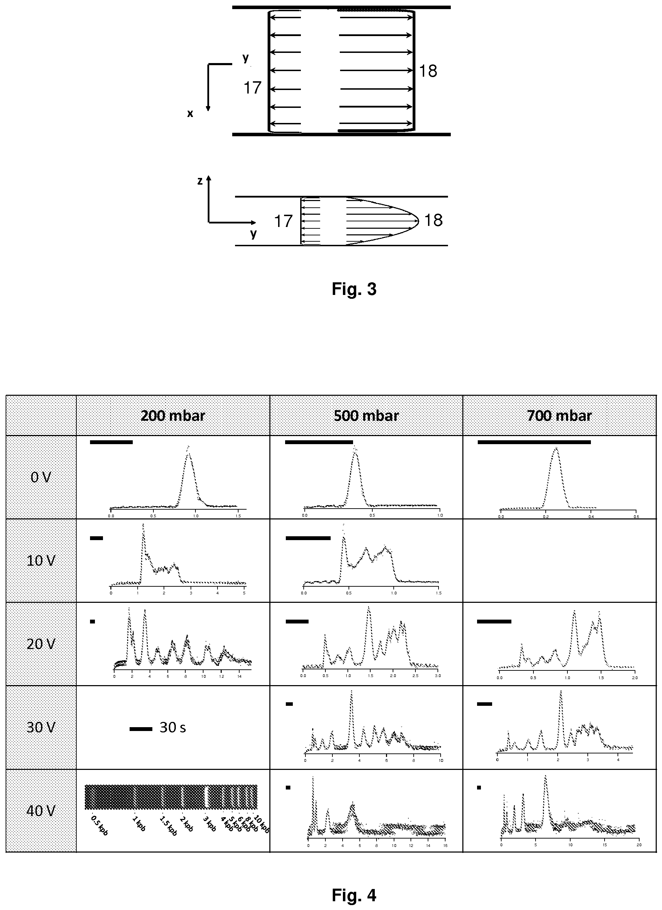

   à la **figure 4****.**

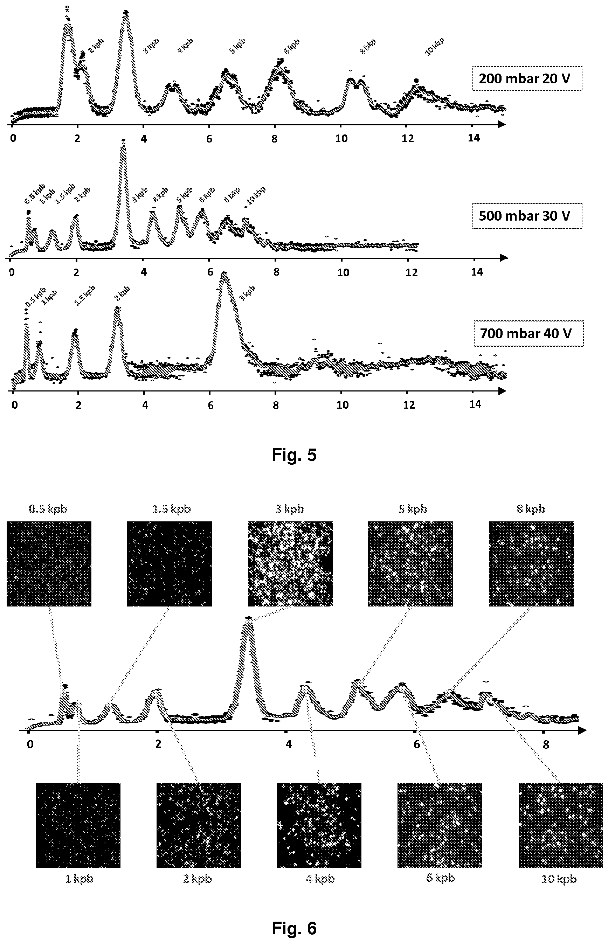

La **figure 6** représente à nouveau l'une de ces séparations (500 mbar
   et 30 V), ainsi que les images acquises pour chacun des maxima d'intensité, illustrant la possibilité de visualisation de molécules individuelles.

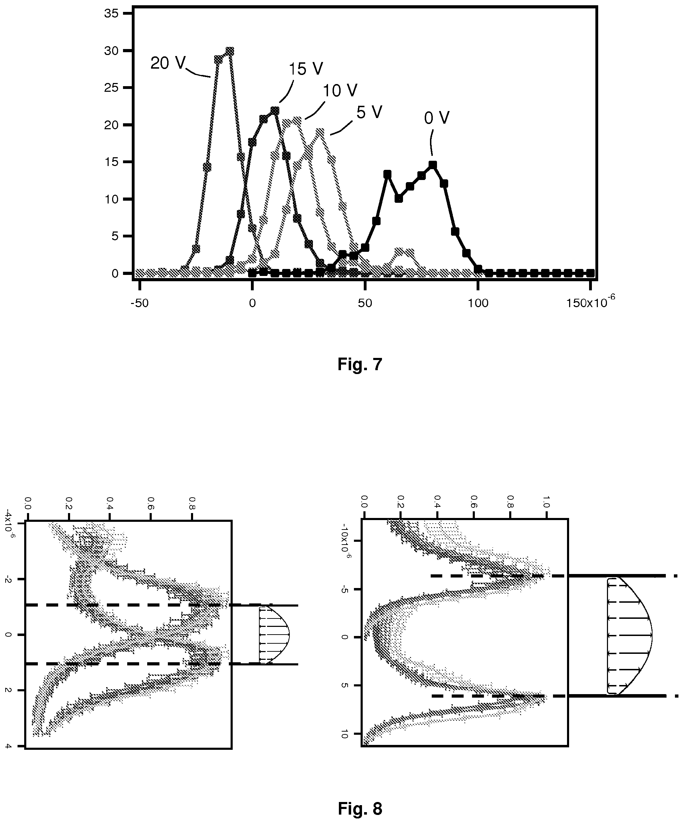

La **figure 7** est un diagramme montrant la distribution de la vélocité de molécules d'ADN individuelles de 48 000 bp avec divers différentiels de potentiel (indiqués sur la figure) et un différentiel de pression fixe de 100 mbar (voir l'exemple 2). La vélocité des molécules est indiquée en abscisse en µm/s, et le pourcentage d'événements figure en ordonnée.
La **figure 8** est un diagramme représentant la répartition spatiale de molécules d'ADN fluorescentes de 48 000 pb dans un canal de 2 µm de hauteur (partie gauche) et dans un canal de 12 µm de hauteur (partie droite), comme expliqué dans l'exemple 2. L'altitude en µm est représentée en ordonnée (une altitude de 0 correspondant au centre du canal), et l'intensité lumineuse mesurée (en unités arbitraires) est représentée en abscisse. Laposition des parois du canal est représentée par des traits pointillés. Sur les deux parties du diagramme, on a superposé les résultats obtenus avec différentes conditions de migration, à savoir :
   - pour le canal de 2 µm de hauteur, des couples différentiel de potentiel / différentiel de pression de 15,4 V / 50 mbar ; 23,5 V / 120 mbar; 29,4 V/*200* mbar; et 45 V/*600* mbar;
   - pour le canal de 12 µm de hauteur, des couples différentiel de potentiel / différentiel de pression de 15 V / 10 mbar ; 59 V / 50 mbar ; 83 V/100 mbar ; et 114 V/200 mbar.

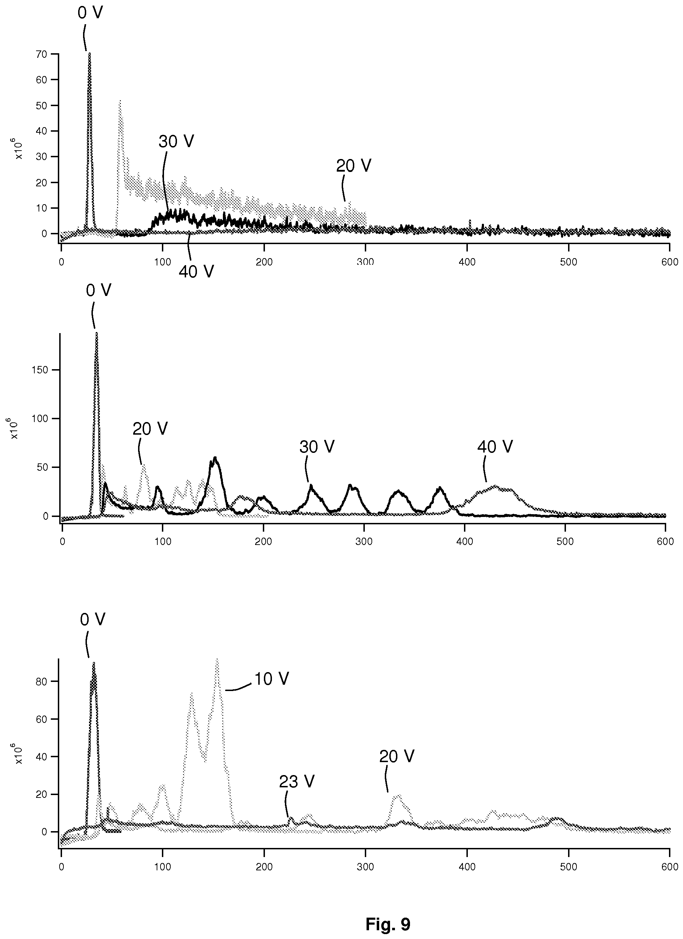

La **figure 9** représente des résultats de séparation de molécules d'ADN allant de 500 à 10000 pb en utilisant le procédé de l'invention, pour diverses conditions de champ électrique et de concentration en polyvinylpyrrolidone (PVP) dans le milieu (voir l'exemple 3 ci-dessous). En abscisse est représentée la durée depuis le début de la migration (en secondes), et en ordonnée est représentée l'intensité lumineuse reçue par le détecteur. Le graphe du haut est obtenu avec 0,1 % de PVP, le graphe du milieu avec 2 % de PVP et le graphe du bas avec 4 % de PVP.

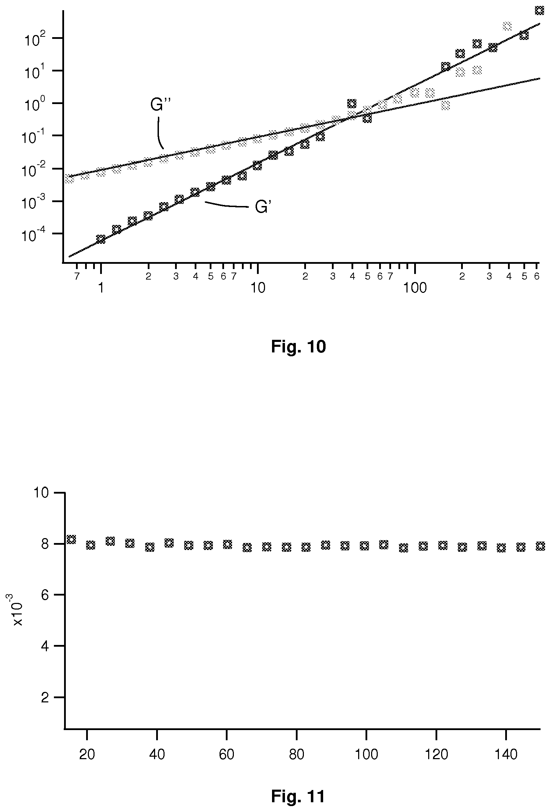

Les **figures 10 et 11** illustrent le comportement rhéologique d'une solution contenant 2 % de PVP. Sur la **figure 10****,** les composantes du module d'élasticité complexe en Pa (G' et G") sont représentées en ordonnée, et la fréquence de réponse du fluide en Hz figure en abscisse. Sur la **figure 11****,** la viscosité en Pa est représentée en ordonnée, et le taux de cisaillement en s⁻¹ figure en abscisse, en régime statique (voir l'exemple 3).

### DESCRIPTION DE MODES DE REALISATION DE L'INVENTION

L'invention est maintenant décrite plus en détail et de façon non limitative dans la description qui suit.

Sauf mention contraire, les concentrations indiquées dans la demande sont des concentrations massiques.

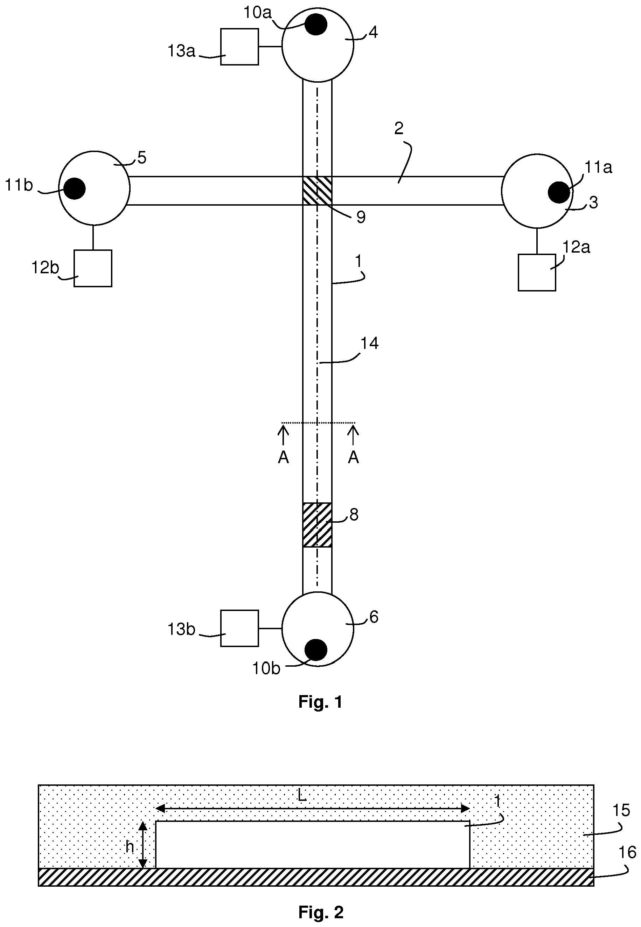

En faisant référence aux **figures 1** et 2, le dispositif selon l'invention comporte un support 16, qui peut être une lame ou lamelle de verre, et une structure 15 présentant un évidement (par exemple une structure microfabriquée), qui peut être en silicium, scellée sur le support 16 de manière connue en soi. Par exemple, il est possible d'utiliser des techniques de dépôt de film, de photolithographie, de gravure (chimique ou plasma) et de collage. Le dépôt de film peut être effectué par centrifugation, par oxydation thermique, par dépôt chimique ou physique en phase vapeur (CVD et PVD), par CVD à basse pression, par CVD améliorée par plasma, par pulvérisation...

La structure 15 (avec son évidement) et le support 16 définissent un canal 1. Le canal 1 présente la forme d'un cylindre creux de section rectangulaire. L'axe principal du cylindre est l'axe d'écoulement 14 dans le canal 1. Perpendiculairement à cet axe d'écoulement 14, la section transversale du canal 1 est définie par une hauteur notée h et une largeur notée L. La hauteur h correspond à la dimension minimale de la section transversale (c'est également la distance entre le support 16 et le fond de l'évidement de la structure 15), et la largeur L correspond à la dimension dans la direction orthogonale à celle de la hauteur.

En général, en utilisation, la hauteur h correspond à la verticale, tandis que la largeur L et l'axe d'écoulement 14 sont dans le plan horizontal.

La valeur de h peut être choisie en fonction de la taille des molécules ou objets déformables à séparer. De manière générale, il faut que le cisaillement selon la hauteur du canal 1 ait un effet sur la molécule ou l'objet déformable, ce qui impose que la dimension des molécules ou des objets déformables dans le milieu liquide utilisé ne soit pas inférieure d'un facteur de plus de 200 ou de 100 ou de 50 ou de 20 à la hauteur du canal 1.

Aux deux extrémités du canal 1 sont prévus respectivement un premier réservoir 4 et un deuxième réservoir 6. Ces réservoirs 4, 6 sont pourvus de moyens respectifs de contrôle de la pression 13a, 13b. Des électrodes 10a, 10b plongent dans les réservoirs 4, 6 afin de permettre la génération d'un champ électrique dans le canal 1.

Un canal supplémentaire 2 coupe le canal 1 (de manière perpendiculaire ou non). Le canal supplémentaire 2 est formé de la même façon que le canal 1. L'intersection entre le canal 1 et le canal supplémentaire 2 définit la zone d'introduction 9.

Le canal supplémentaire 2 est lui aussi pourvu d'un premier réservoir 3 et d'un deuxième réservoir 5 à ses extrémités. Ces réservoirs 3, 5 sont pourvus de moyens respectifs de contrôle de la pression 12a, 12b. Optionnellement, les réservoirs 3, 5 sont également pourvus d'électrodes respectives 11a, 11b adaptées à générer un champ électrique dans le canal supplémentaire 2.

En utilisation, le canal 1 et le canal supplémentaire 2 sont remplis d'une solution, qui est adaptée à l'électrophorèse. Un échantillon de molécules ou objets déformables à analyser est introduit dans le dispositif par le premier réservoir 3 du canal supplémentaire 2. Au moyen d'un flux hydrodynamique généré dans le canal supplémentaire 2 et / ou au moyen d'un champ électrique généré dans le canal supplémentaire 2, les molécules ou objets déformables à analyser migrent le long du canal supplémentaire, en direction du deuxième réservoir 5, jusqu'à la zone d'introduction 9.

Cette première étape de migration permet d'obtenir une concentration homogène de molécules ou objets déformables à analyser dans la zone d'introduction 9 avant le début de la séparation proprement dite des molécules ou objets déformables présents dans cette zone.

Dans un deuxième temps, cette migration est interrompue, et on met alors en oeuvre la migration des molécules ou objets déformables à analyser dans le canal 1, le long de l'axe d'écoulement 14, du premier réservoir 4 vers le deuxième réservoir 6. Pour ce faire, un flux hydrodynamique est généré dans le canal 1 (notamment par les moyens de contrôle de pression 13a, 13b du premier réservoir 4 et du deuxième réservoir 6).

Conjointement, un champ électrique est généré dans le canal 1 au moyen des électrodes 11a, 11b dans les réservoirs 4, 6 respectifs. De préférence, ce champ électrique est adapté pour appliquer une force électrostatique sur les molécules ou objets déformables à séparer qui tend à les déplacer dans la direction opposée au flux hydrodynamique. Le sens du champ électrique dépend donc du signe de la charge globale des molécules ou objets déformables à séparer.

En faisant référence à la **figure 3** (la partie supérieure de la figure étant une vue de dessus, et la partie inférieure une vue de côté), lors de la séparation, le champ de force électrophorétique 17 dans le canal 1 lors de la séparation est essentiellement uniforme, aussi bien dans la direction de l'axe d'écoulement 14 (axe y), que selon la hauteur h (axe z) et la largeur L (axe x) du canal 1, sauf au voisinage immédiat des parois du canal (sur une longueur caractéristique négligeable par rapport aux dimensions h et L).

En ce qui concerne le champ de force hydrodynamique 18, celui-ci est uniforme dans la direction de l'axe d'écoulement 14 (axe y) et selon la largeur L (axe x) sauf au voisinage immédiat des parois du canal (sur une longueur caractéristique négligeable par rapport à la dimension L). En revanche, il n'est pas uniforme selon la hauteur h (axe z). Généralement, il présente un profil de type parabolique caractéristique de la loi de Poiseuille.

Le rapport d'aspect L/h du canal 1 est choisi afin d'obtenir cette configuration du champ de force hydrodynamique : c'est pourquoi le rapport d'aspect est généralement supérieur ou égal à 10, ou à 15 ou à 20. La non-uniformité du champ de force hydrodynamique 18 selon la hauteur h est importante pour l'efficacité de la séparation des molécules ou objets déformables. L'uniformité de celui-ci selon la largeur L permet d'éviter toute perte de résolution, s'agissant d'une détection qui est généralement opérée, dans la zone de détection 8, en une position donnée (ou sur un intervalle donné) le long de l'axe d'écoulement et par sommation du signal le long de la largeur L.

Les profils souhaités de flux hydrodynamique (caractérisés notamment par des valeurs de débit et de vitesse moyenne données), sont obtenus en actionnant les moyens respectifs de contrôle de pression 13a, 13b (et éventuellement 12a, 12b), de sorte à générer une différence de pression entre un ou des réservoirs d'entrée et un ou des réservoirs de sortie. Par exemple, pour générer le flux hydrodynamique assurant la migration des molécules ou objets déformables à séparer de la zone d'introduction 9 vers la zone de détection 8, on génère une différence de pression entre les réservoirs 3, 4, 5 et le réservoir 6. Par exemple, compte tenu de la géométrie des canaux, une différence de pression de 0,01 à 10 bar, de préférence de 0,05 à 4 bar, et de manière plus particulièrement préférée de 0,1 à 1 bar, permet d'obtenir les profils de flux hydrodynamique souhaités.

On peut également prévoir un système de vannes pour rendre les flux dans les deux canaux 1, 2 indépendants l'un de l'autre.

Les moyens de détection ne sont pas représentés sur les figures. Ils peuvent comprendre un objectif de microscope du côté du support 16 opposé au canal 1, et un détecteur relié à celui-ci, tel qu'une caméra CCD. Les molécules individuelles ou les objets déformables individuels peuvent ainsi être détectés sur l'image acquise, et une mesure d'intensité globale dans la zone de détection 8 ou une partie de celle-ci en fonction du temps peut être effectuée.

Des moyens d'analyse des mesures et de présentation des données obtenues peuvent être associés à ce dispositif.

Le dispositif peut aussi être intégré dans un laboratoire sur puce, comprenant par exemple d'autres canaux, réservoirs et / ou électrodes similaires à ceux décrits ci-dessus. Par exemple, le laboratoire sur puce peut comprendre un dispositif de réaction chimique ou biochimique, couplé, en aval, au dispositif de séparation selon l'invention. Ainsi, la mise en oeuvre du procédé de séparation selon l'invention permet d'analyser les produits d'une réaction chimique ou biochimique mise en oeuvre dans le laboratoire sur puce.

Le laboratoire sur puce peut également comprendre des moyens de collecte de fractions correspondant aux différentes molécules ou objets déformables séparés. Ces moyens de collecte peuvent être prévus en aval de la zone de détection 8. Alternativement, ils peuvent remplacer la zone de détection 8, auquel cas le dispositif est utilisé dans un but uniquement préparatif.

Ces moyens de collecte peuvent être prévus en combinaison avec le dispositif de réaction chimique ou biochimique mentionné ci-dessus, ou sans celui-ci.

### EXEMPLES

Les exemples suivants illustrent l'invention sans la limiter.

### Exemple 1 -séparation d'une population de molécules d'ADN double brin

Dans cet exemple, l'invention est mise en oeuvre pour réaliser la séparation d'une population de molécules d'ADN double brin présentant des tailles de 500 pb, 1000 pb, 1500 pb, 2000 pb, 3000 pb, 4000 pb, 5000 pb,
6000 pb, 8000 pb et 10000
pb.

Cette population de molécules est diluée dans une solution tampon contenant 180 mM de trishydroxyméthylaminométhane, 180 mM d'acide borique, 4 mM d'acide éthylène diamine tétraacétique, 0,5 µM de dithiothréitol, et 2 % en masse de polyvinylpyrrolidone (PVP, 360 kDa), avec
une concentration globale de 5 ng/µl en bases nucléiques, ce qui correspond pour chacune des tailles considérées à des concentrations molaires respectives de 5.10⁻¹² M (500 bp), 1,3.10⁻¹² M (1000 bp), 4,8.10⁻¹³ M (1 500 bp), 3.6.10⁻¹³ M (2000 bp), 4,2.10⁻¹³ M (3000 bp), 6.3.10⁻¹⁴ M (4000 bp), 5,1.10⁻¹⁴ M (5000 bp), 4,2.10⁻¹⁴ M (6000 bp), 2.10⁻¹⁴ M (8000 bp), 1,3.10⁻¹⁴ M (10000 bp).

Les acides nucléiques sont rendus fluorescents par marquage à l'aide d'un agent intercalant (YOYO®, Molecular Probes) à raison d'une sonde pour 4 paires de bases.

Le dispositif utilisé pour séparer et analyser cette population de molécules est tel que représenté sur la **figure 1****.** Le canal 1 et le canal supplémentaire 2 ont une largeur de 100 µm et une hauteur de 2 µm. La zone d'introduction 9 et la zone de détection 8 sont séparées de 5 mm.

200 µl solution tampon, ne contenant pas d'échantillon biologique sont disposés dans les réservoirs 3, 4, 5, et 6 du canal 1 du canal supplémentaire 2. Un flux de solution des réservoirs 3, 4, 5 vers le réservoir 6 est créé par ajustement des pressions afin de permettre la saturation des surfaces en PVP, et ce durant 30 min. 200 µl de solution contenant l'échantillon d'intérêt sont ensuite disposés dans le premier réservoir 3 du canal supplémentaire 2.

On réalise plusieurs essais de migrations, en ajustant la différence de potentiel et le différentiel de pression dans le canal 1 à plusieurs valeurs différentes, allant de 0 à 40 V et de 200 à 700 mbar respectivement.

Le suivi de l'intensité au niveau de la zone de détection 8 est effectué à l'aide d'un microscope de fluorescence (grossissement 100 X), et imagé à l'aide d'une caméra CCD à une fréquence de 5Hz.
La meilleure résolution sur l'ensemble de la gamme 500-10 000 pb est obtenue avec 20 V et 200 mbar, ou 30 V et 500 mbar (cette dernière configuration assurant en outre une durée de migration inférieure à 8 minutes).

Les résultats sont représentés sur les **figures 4 à 6****.**

### Exemple 2 - description du mécanisme de séparation par suivi de molécules uniques

Dans cet exemple, on utilise le même dispositif expérimental que dans l'exemple précédent. On étudie la migration dans le canal d'un ADN de 48 000 paires de bases environ (ADN du phage lambda). La concentration en masse de polyvinylpyrrolidone (PVP, 360 kDa) est de 2 %. On applique dans un premier temps un différentiel de pression de 100 mbar, et on réalise des migrations avec des différentiels de potentiel respectifs de 0, 5, 10, 15 et 20 V. On mesure la vélocité d'un grand nombre de molécules d'ADN individuelles fluorescentes, pour chacune de ces différences de potentiel, et on examine la distribution de la vélocité.

Les résultats sont représentés sur la **figure 7****.**

On constate que la dispersion de la vélocité diminue lorsque le différentiel de potentiel croit, ce qui témoigne d'un effet de localisation spatiale des molécules d'ADN dans le canal.

Dans un second temps, on analyse la répartition des molécules d'ADN dans la direction de la hauteur du canal. Pour ce faire, on effectue des mesures d'intensité de fluorescence dans divers plans focaux, au moyen du positionneur piezoélectrique de l'objectif. Les résultats sont représentés sur la partie gauche de la **figure 8****.**

Quatre couples de conditions de différentiel de pression et de différentiel de potentiel ont été utilisés, permettant d'obtenir une vélocité de migration (selon l'axe du canal) des molécules d'ADN essentiellement nulle. Ces couples de conditions sont les suivants : 15,4 V/50 mbar ; 23,5 V/120 mbar ; 29,4 V/200 mbar ; et 45 V/600 mbar. Les quatre courbes d'intensité lumineuse correspondantes se superposent approximativement, et illustrent que les molécules d'ADN se concentrent au voisinage des parois. L'expérience est ensuite répétée avec un dispositif présentant une hauteur de canal supérieure, de 12 µm. Les résultats sont représentés sur la partie droite de la **figure** 8. Les couples de conditions utilisés permettant d'annuler la vitesse de migration des molécules le long du canal sont les suivants : 15 V / 10 mbar ; 59 V / 50 mbar ; 83 V / 100 mbar ; et 114 V / 200 mbar. On constate à nouveau que les molécules d'ADN se localisent au voisinage des parois du canal.

### Exemple 3 - influence de la nature du milieu liquide

Dans cet exemple, on utilise le même dispositif expérimental que dans l'exemple 1, et on étudie la séparation de la même population d'ADN. On teste l'influence du caractère non newtonien du milieu liquide sur l'efficacité de la séparation.

Pour ce faire, on réalise des migrations en faisant varier la concentration de PVP dans la solution tampon, entre des valeurs de 0,1 %, de 2% (comme dans l'exemple 1) et de 4 %.

A une concentration de 0,1 %, le milieu est un fluide newtonien. Aux concentrations de 2 et 4 %, c'est un fluide non newtonien.

Le différentiel de pression appliqué est de 50 mbar, 150 mbar et 600 mbar pour les concentrations respectives en PVP de 0.1 %, de 2% et de 4%. Les différentiels de potentiel appliqués sont de 0, 10, 20, 23, 30 et 40 V selon les expériences. Les résultats sont représentés sur la **figure** 9. On constate que la séparation est grandement améliorée lorsque le milieu de séparation comprend une concentration de PVP supérieure à un certain seuil, proche de la concentration de recouvrement de 0.4% du PVP (340 kDa), conférant des propriétés non newtoniennes au milieu liquide de séparation.

Ces propriétés non newtoniennes sont mises en évidence avec des méthodes d'analyse mécanique dynamique avec un rhéomètre de Couette.

Plus précisément, le fluide est disposé entre un cylindre central de rayon R et un cylindre périphérique (la distance entre les deux cylindres étant notée ΔR, et la hauteur des cylindres étant notée h). On impose une rotation au cylindre central avec une fréquence de rotation w (en s⁻¹) et on mesure le couple mécanique M induit sur le cylindre périphérique. La contrainte est déterminée comme étant σ=M/(2πR² h). Le taux de cisaillement est défini comme étant τ=R·w/ΔR.

Lorsque l'on applique une rotation du cylindre variable dans le temps, selon une fonction de type sinusoïdale, il est pratique de représenter la contrainte et le taux de cisaillement en fonction du temps par des nombres complexes : σ(t)=σ₀ (w)·e^{iwt} et τ(t)=γ(w)·e^{i(wt+ϕ)}. Cela permet de définir une viscosité complexe du fluide µ(w)=µ'(w)-i·µ"(w), avec µ'(w) et µ"(w) des nombres réels, et σ(t)=µ(w)·τ(t). On définit par ailleurs les modules d'élasticité G'(w)=w·µ"(w) (module de conservation) et G"(w)=w·µ'(w) (module de perte).

Dans le cas d'un fluide newtonien, G'(w)=0 et G"(w)=w·µ₀, µ₀ étant la viscosité (constante) du fluide.

En revanche, la solution comprenant 2 % de PVP présente une composante G'(w) non nulle et qui devient dominante aux fréquences élevées (au-dessus de 30Hz environ) **(****figure 10****).** La viscosité, en revanche, est constante lorsque le taux de cisaillement varie, en régime statique **(****figure 11****).**

## Revendications

1. Procédé de séparation d'une pluralité d'objets déformables en milieu liquide, comprenant :
- l'introduction des objets déformables dans un canal (1), le canal (1) présentant un axe d'écoulement (14) et une section transversale orthogonale à l'axe d'écoulement (14), et la dimension minimale de ladite section transversale étant inférieure ou égale à 200 µm ; et
- l'application d'un flux hydrodynamique dans le canal (1) conjointement avec l'application d'un champ électrique dans le canal (1), permettant de déplacer les objets déformables dans le canal (1) selon l'axe d'écoulement (14) et de les séparer le long de l'axe d'écoulement (14) ;
le milieu liquide étant un fluide non newtonien.

2. Procédé selon la revendication 1, dans lequel l'introduction des objets déformables est effectuée dans une zone d'introduction (9) du canal (1) et le déplacement des objets déformables est effectué de la zone d'introduction (9) vers une zone de détection (8) du canal (1), le procédé comprenant en outre :
- la détection des objets déformables arrivant dans la zone de détection (8).

3. Procédé selon la revendication 1 ou 2, dans lequel :
- la dimension minimale du canal (1) est inférieure ou égale à 25 µm, ou inférieure ou égale à 15 µm, ou inférieure ou égale à 10 µm, ou inférieure ou égale à 5 µm, ou inférieure ou égale à 2 µm ; et / ou
- le rapport entre la dimension minimale de la section transversale et la dimension de la section transversale dans une direction orthogonale à celle de la dimension minimale est inférieur ou égal à 1/10, de préférence inférieur ou égal à 1/15, de manière plus particulièrement préférée inférieur ou égal à 1/20 ; et / ou
- la distance entre la zone d'introduction (9) et la zone de détection (8) du canal (1) vaut de 500 µm à 20 cm, de préférence de 1 mm à 10 cm, et de manière plus particulièrement préférée de 2 mm à 1 cm.

4. Procédé selon l'une des revendications 1 à 3, dans lequel le milieu liquide présente une viscosité de 1 à 100 cP, de préférence de 1 à 20 cP, et de manière encore plus préférée de 2à10cP.

5. Procédé selon l'une des revendications 1 à 4, dans lequel le milieu liquide comprend des polymères non chargés, de préférence choisis parmi la polyvinylpyrrolidone, le poly-(éthylène glycol), le polyacrylamide et leurs mélanges, la concentration des polymères non chargés étant de préférence supérieure ou égale à la concentration critique de recouvrement ; la concentration massique des polymères non chargés étant de préférence de 0,1 à 10 %, plus particulièrement de 0,5 à 5 % et encore plus préférentiellement de 1 à 4 % ; et les polymères non chargés présentant de préférence une masse moléculaire moyenne de 10 à 100 000 kDa, plus particulièrement de 50 à 10 000 kDa et plus préférentiellement de 100 à 1 000 kDa.

6. Procédé selon l'une des revendications 1 à 5, dans lequel les objets déformables présentent un module élastique inférieur ou égal à 10⁹ Pa, ou inférieur ou égal à 10⁶ Pa, ou encore inférieur ou égal à 10³ Pa ; et/ou les objets déformables sont choisis parmi les molécules telles que les molécules d'acide nucléique, les assemblages supramoléculaires, les cellules et les fragments de cellules.

7. Procédé selon l'une des revendications 1 à 6, dans lequel :
- le champ électrique appliqué vaut de 10 V/m à 10000 V/m, de préférence de 100 V/m à 5000 V/m, et de manière plus particulièrement préférée de 200 V/m à 1000 V/m ; et / ou
- le flux hydrodynamique est **caractérisé par** une vitesse moyenne de 1 à 10 000 µm/s, de préférence de 5 à 5 000 µm/s et de manière plus particulièrement préférée de 10 à 1 000 µm/s.

8. Dispositif de séparation d'objets déformables en milieu liquide, comprenant :
- un canal (1) présentant un axe d'écoulement (14) et une section transversale orthogonale à l'axe d'écoulement (14), la dimension minimale de ladite section transversale étant inférieure ou égale à 200 µm et le canal (1) étant rempli d'un milieu liquide non newtonien ;
- des moyens d'application d'un flux hydrodynamique (13a, 13b) dans le canal (1) ; et
- des moyens d'application d'un champ électrique (10a, 10b) dans le canal (1).

9. Dispositif selon la revendication 8, dans lequel le milieu liquide présente une viscosité de 1 à 100 cP, de préférence de 2 à 20 cP, et de manière encore plus préférée de 2 à 10 cP.

10. Dispositif selon la revendication 8 ou 9, dans lequel le milieu liquide comprend des polymères non chargés, de préférence choisis parmi la polyvinylpyrrolidone, le poly-(éthylène glycol), le polyacrylamide et leurs mélanges, la concentration des polymères non chargés étant de préférence supérieure ou égale à la concentration critique de recouvrement ; la concentration massique des polymères non chargés étant de préférence de 0,1 à 10 %, plus particulièrement de 0,5 à 5 % et encore plus préférentiellement de 1 à 4 % ; et les polymères non chargés présentant de préférence une masse moléculaire moyenne de 10 à 100 000 kDa, plus particulièrement de 50 à 10 000 kDa et plus préférentiellement de 100 à 1 000 kDa.

11. Dispositif selon l'une des revendications 8 à 10, comprenant :
- une pluralité de canaux présentant chacun un axe d'écoulement et une section transversale orthogonale à l'axe d'écoulement, la dimension minimale de ladite section transversale étant inférieure ou égale à 200 µm et chaque canal étant rempli d'un milieu liquide non newtonien ;
- des moyens d'application d'un flux hydrodynamique dans les canaux ; et
- des moyens d'application d'un champ électrique dans les canaux.

12. Dispositif selon l'une des revendications 8 à 11, dans lequel le canal est une lumière d'un tube capillaire ; ou la pluralité de canaux sont des lumières de tubes capillaires, de préférence disposés en parallèles.

13. Dispositif selon l'une des revendications 8 à 12, comprenant :
- une zone d'introduction (9) et une zone de détection (8) dans le canal (1) espacées le long de l'axe d'écoulement (14) ;
- des moyens de détection des objets déformables arrivant dans la zone de détection (8) ;
et dans lequel, de préférence, la zone d'introduction (9) du canal (1) est formée par une intersection du canal (1) avec un canal supplémentaire (2), le dispositif comprenant des moyens d'amenée des objets déformables (3) dans le canal supplémentaire (2), et des moyens de déplacement des objets déformables vers l'intersection, qui comprennent de préférence des moyens d'application d'un champ électrique (11a, 11b) dans le canal supplémentaire (2) et / ou des moyens d'application d'un flux hydrodynamique (12a, 12b) dans le canal supplémentaire (2).

14. Dispositif selon l'une des revendications 8 à 13, dans lequel :
- la dimension minimale du canal (1) est inférieure ou égale à 25 µm, ou inférieure ou égale à 15 µm, ou inférieure ou égale à 10 µm, ou inférieure ou égale à 5 µm, ou inférieure ou égale à 2 µm; et / ou
- le rapport entre la dimension minimale de la section transversale et la dimension de la section transversale dans une direction orthogonale à celle de la dimension minimale est inférieur ou égal à 1/10, de préférence inférieur ou égal à 1/15, de manière plus particulièrement préférée inférieur ou égal à 1/20 ; et / ou
- la distance entre la zone d'introduction (9) et la zone de détection (8) du canal (1) vaut de 500 µm à 20 cm, de préférence de 1 mm à 10 cm, et de manière plus particulièrement préférée de 2 mm à 1 cm.

15. Système de laboratoire sur puce comprenant le dispositif de séparation selon l'une des revendications 8 à 14, connecté en sortie d'un dispositif de réaction chimique ou biochimique et / ou alimentant des moyens de collecte des objets déformables séparés.

## Patentansprüche

1. Verfahren zum Abtrennen einer Mehrzahl von verformbaren Objekten in einem flüssigen Medium, das Folgendes beinhaltet:
- Einleiten der verformbaren Objekte in einen Kanal (1), wobei der Kanal (1) eine Strömungsachse (14) und einen transversalen Abschnitt orthogonal zur Strömungsachse (14) hat und wobei die Mindestabmessung des transversalen Abschnitts gleich oder kleiner als 200 µm ist; und
- Applizieren eines hydrodynamischen Flusses in dem Kanal (1) zusammen mit dem Anlegen eines elektrischen Feldes in dem Kanal (1), so dass die verformbaren Objekte in dem Kanal (1) entlang der Strömungsachse (14) bewegt und entlang der Strömungsachse (14) abgetrennt werden können;
wobei das flüssige Medium ein nicht-Newtonsches Fluid ist.

2. Verfahren nach Anspruch 1, bei dem das Einleiten der verformbaren Objekte in einer Einleitungszone (9) des Kanals (1) erfolgt und das Bewegen der verformbaren Objekte von der Einleitungszone (9) zu einer Erkennungszone (8) des Kanals (1) erfolgt, wobei das Verfahren ferner Folgendes beinhaltet:
- Erkennen der verformbaren Objekte, die in der Erkennungszone (8) ankommen.

3. Verfahren nach Anspruch 1 oder 2, bei dem:
- die Mindestabmessung des Kanals (1) gleich oder kleiner als 25 µm oder gleich oder kleiner als 15 µm oder gleich oder kleiner als 10 µm oder gleich oder kleiner als 5 µm oder gleich oder kleiner als 2 µm ist; und/oder
- das Verhältnis zwischen der Mindestabmessung des transversalen Abschnitts und der Abmessung des transversalen Abschnitts in einer Richtung orthogonal zu der der Mindestabmessung gleich oder kleiner als 1:10, vorzugsweise gleich oder kleiner als 1:15, stärker bevorzugt gleich oder kleiner als 1:20 ist; und/oder
- der Abstand zwischen der Einleitungszone (9) und der Erkennungszone (8) des Kanals (1) 500 µm bis 20 cm, vorzugsweise 1 mm bis 10 cm und stärker bevorzugt 2 mm bis 1 cm beträgt.

4. Verfahren nach einem der Ansprüche 1 bis 3, bei dem das flüssige Medium eine Viskosität von 1 bis 100 cP, vorzugsweise von 1 bis 20 cP und noch stärker bevorzugt von 2 bis 10 cP hat.

5. Verfahren nach einem der Ansprüche 1 bis 4, bei dem das flüssige Medium nicht geladene Polymere umfasst, vorzugsweise ausgewählt aus Polyvinylpyrrolidon, Poly(ethylenglykol), Polyacrylamid und deren Gemischen, wobei die Konzentration der nicht geladenen Polymere vorzugsweise gleich oder größer ist als die kritische Abdeckkonzentration; wobei die Massekonzentration der nicht geladenen Polymere vorzugsweise 0,1 bis 10 %, bevorzugter 0,5 bis 5 % und noch stärker bevorzugt 1 bis 4 % beträgt; und wobei die nicht geladenen Polymere vorzugsweise eine mittlere Molekularmasse von 10 bis 100.000 kDa, bevorzugter von 50 bis 10.000 kDa und noch stärker bevorzugt von 100 bis 1.000 kDa haben.

6. Verfahren nach einem der Ansprüche 1 bis 5, bei dem die verformbaren Objekte ein Elastizitätsmodul von gleich oder kleiner als 10⁹ Pa oder gleich oder kleiner als 10⁶ Pa oder auch gleich oder kleiner als 10³ Pa haben; und/oder die verformbaren Objekte ausgewählt sind aus Molekülen wie Nukleinsäuremolekülen, supramolekularen Assoziaten, Zellen und Zellfragmenten.

7. Verfahren nach einem der Ansprüche 1 bis 6, bei dem:
- das angelegte elektrische Feld eine Stärke von 10 V/m bis 10.000 V/m, vorzugsweise von 100 V/m bis 5000 V/m und stärker bevorzugt von 200 V/m bis 1000 V/m hat; und/oder
- der hydrodynamische Fluss durch eine mittlere Geschwindigkeit von 1 bis 10.000 µm/s, vorzugsweise von 5 bis 5000 µm/s und stärker bevorzugt von 10 bis 1000 µm/s charakterisiert ist.

8. Vorrichtung zum Abtrennen von verformbaren Objekten in einem flüssigen Medium, die Folgendes umfasst:
- einen Kanal (1) mit einer Strömungsachse (14) und einem transversalen Abschnitt orthogonal zur Strömungsachse (14), wobei die Mindestabmessung des transversalen Abschnitts gleich oder kleiner als 200 µm ist und der Kanal (1) mit einem nicht-Newtonschen flüssigen Medium gefüllt ist;
- Mittel zum Applizieren eines hydrodynamischen Flusses (13a, 13b) in dem Kanal (1); und
- Mittel zum Anlegen eines elektrischen Feldes (10a, 10b) in dem Kanal (1).

9. Vorrichtung nach Anspruch 8, bei der das flüssige Medium eine Viskosität von 1 bis 100 cP, vorzugsweise von 2 bis 20 cP und noch stärker bevorzugt von 2 bis 10 cP hat.

10. Vorrichtung nach Anspruch 8 oder 9, wobei das flüssige Medium nicht geladene Polymere umfasst, vorzugsweise ausgewählt aus Polyvinylpyrrolidon, Poly(ethylenglykol), Polyacrylamid und deren Gemischen, wobei die Konzentration der nicht geladenen Polymere vorzugsweise gleich oder größer ist als die kritische Abdeckkonzentration; wobei die Massekonzentration der nicht geladenen Polymere vorzugsweise 0,1 bis 10 %, bevorzugter 0,5 bis 5 % und noch stärker bevorzugt 1 bis 4 % beträgt; und die nicht geladenen Polymere vorzugsweise eine mittlere Molekularmasse von 10 bis 100.000 kDa, bevorzugter von 50 bis 10.000 kDa und noch stärker bevorzugt von 100 bis 1.000 kDa haben.

11. Vorrichtung nach einem der Ansprüche 8 bis 10, die Folgendes umfasst:
- mehrere Kanäle, die jeweils eine Strömungsachse und einen transversalen Abschnitt orthogonal zur Strömungsachse haben, wobei die Mindestabmessung des transversalen Abschnitts gleich oder kleiner als 200 µm ist und jeder Kanal mit einem nicht-Newtonschen flüssigen Medium gefüllt ist;
- Mittel zum Applizieren eines hydrodynamischen Flusses in den Kanälen; und
- Mittel zum Anlegen eines elektrischen Feldes in den Kanälen.

12. Vorrichtung nach einem der Ansprüche 8 bis 11, bei der der Kanal ein Lumen einer Kapillarröhre ist; oder die Mehrzahl von Kanälen Lumen von Kapillarröhren sind, vorzugsweise parallel angeordnet.

13. Vorrichtung nach einem der Ansprüche 8 bis 12, die Folgendes umfasst:
- eine Einleitungszone (9) und eine Erkennungszone (8) in dem Kanal (1), die entlang der Strömungsachse (14) beabstandet sind;
- Mittel zum Erkennen der verformbaren Objekte, die in der Erkennungszone (8) ankommen;
und wobei vorzugsweise die Einleitungszone (9) des Kanals (1) durch einen Schnittpunkt des Kanals (1) mit einem zusätzlichen Kanal (2) gebildet wird, wobei die Vorrichtung Mittel zum Zuführen der verformbaren Objekte (3) in den zusätzlichen Kanal (2) und Mittel zum Bewegen der verformbaren Objekte zum Schnittpunkt hin umfasst, die vorzugsweise Mittel zum Anlegen eines elektrischen Feldes (11a, 11b) in dem zusätzlichen Kanal (2) und/oder Mittel zum Applizieren eines hydrodynamischen Flusses (12a, 12b) in dem zusätzlichen Kanal (2) umfassen.

14. Vorrichtung nach einem der Ansprüche 8 bis 13, bei der:
- die Mindestabmessung des Kanals (1) gleich oder kleiner als 25 µm oder gleich oder kleiner als 15 µm oder gleich oder kleiner als 10 µm oder gleich oder kleiner als 5 µm oder gleich oder kleiner als 2 µm ist; und/oder
- das Verhältnis zwischen der Mindestabmessung des transversalen Abschnitts und der Abmessung des transversalen Abschnitts in einer Richtung orthogonal zu der der Mindestabmessung gleich oder kleiner als 1:10, vorzugsweise gleich oder kleiner als 1:15, stärker bevorzugt gleich oder kleiner als 1:20 ist; und/oder
- der Abstand zwischen der Einleitungszone (9) und der Erkennungszone (8) des Kanals (1) einen Wert von 500 µm bis 20 cm, vorzugsweise von 1 mm bis 10 cm und stärker bevorzugt von 2 mm bis 1 cm hat.

15. Laborsystem-on-Chip, das die Abtrennvorrichtung nach einem der Ansprüche 8 bis 14 umfasst, die am Ausgang mit einer chemischen oder biochemischen Reaktionsvorrichtung verbunden ist und/oder Mittel zum Sammeln der abgetrennten verformbaren Objekte speist.

## Claims

1. A method for separating a plurality of deformable objects in a liquid medium, comprising:
- introducing the deformable objects into a channel (1), the channel (1) having a flow axis (14) and a cross section orthogonal to the flow axis (14), and the minimum dimension of said cross section being less than or equal to 200 µm; and
- applying a hydrodynamic flow in the channel (1) together with the application of an electric field in the channel (1), allowing the deformable objects to be displaced in the channel (1) according to the flow axis (14) and to be separated along the flow axis (14);
the liquid medium being a non-Newtonian fluid.

2. The method according to Claim 1, wherein the introduction of the deformable objects is carried out in an introduction zone (9) of the channel (1), and the displacement of the deformable objects is carried out from the introduction zone (9) to a detection zone (8) of the channel (1), the method further comprising:
- detecting the deformable objects which arrive in the detection zone (8).

3. The method according to Claim 1 or 2, wherein:
- the minimum dimension of the channel (1) is less than or equal to 25 µm, or less than or equal to 15 µm, or less than or equal to 10 µm, or less than or equal to 5 µm, or less than or equal to 2 µm; and/or
- the ratio between the minimum dimension of the cross section and the dimension of the cross section in a direction orthogonal to that of the minimum dimension is less than or equal to 1/10, preferably less than or equal to 1/15, particularly preferably less than or equal to 1/20; and/or
- the distance between the introduction zone (9) and the detection zone (8) of the channel (1) is from 500 µm to 20 cm, preferably from 1 mm to 10 cm, and more particularly preferably from 2 mm to 1 cm.

4. The method according to any of Claims 1 to 3, wherein the liquid medium has a viscosity of from 1 to 100 cP, preferably from 1 to 20 cP, and even more preferably from 2 to 10 cP.

5. The method according to any of Claims 1 to 4, wherein the liquid medium comprises uncharged polymers, preferably chosen from polyvinylpyrrolidone, poly(ethylene glycol), polyacrylamide and mixtures thereof, the concentration of uncharged polymers preferably being greater than or equal to the critical coverage concentration; the mass concentration of the uncharged polymers preferably being from 0.1 to 10 %, more particularly from 0.5 to 5 % and even more preferably from 1 to 4 %; and the uncharged polymers preferably having an average molecular mass of 10 to 100,000 kDa, more particularly 50 to 10,000 kDa, and more preferably 100 to 1,000 kDa.

6. The method according to any of Claims 1 to 5, wherein the deformable objects have a modulus of elasticity less than or equal to 10⁹ Pa, or less than or equal to 10⁶ Pa, or else less than or equal to 10³ Pa; and/or the deformable objects are chosen from molecules such as nucleic acid molecules, supramolecular assemblies, cells and fragments of cells.

7. The method according to any of Claims 1 to 6, wherein:
- the electric field applied is from 10 V/m to 10,000 Vm, preferably from 100 V/m to 5,000 V/m, and more particularly preferably from 200 V/m to 1,000 Vm; and/or
- the hydrodynamic flow is **characterised by** an average speed of 1 to 10,000 µm/s, preferably 5 to 5,000 µm/s and more particularly preferably 10 to 1,000 µm/s.

8. A device for separating deformable objects in a liquid medium, comprising:
- a channel (1) having a flow axis (14) and a cross section orthogonal to the flow axis (14), the minimum dimension of said cross section being less than or equal to 200 µm and the channel (1) being filled with a non-Newtonian liquid medium;
- means for applying a hydrodynamic flow (13a, 13b) in the channel (1); and
- means for applying an electric field (10a, 10b) in the channel (1).

9. The device according to Claim 8, wherein the liquid medium has a viscosity of 1 to 100 cP, preferably of 2 to 20 cP, and even more preferably of 2 to 10 cP.

10. The device according to Claim 8 or 9, wherein the liquid medium comprises uncharged polymers, preferably chosen from polyvinylpyrrolidone, poly(ethylene glycol), polyacrylamide and mixtures thereof, the concentration of the uncharged polymers preferably being greater than or equal to the critical coverage concentration; the mass concentration of the uncharged polymers preferably being 0.1 to 10 %, more particularly 0.5 to 5 %, and even more preferably 1 to 4 %; and the uncharged polymers preferably having an average molecular mass of 10 to 100,000 kDa, more particularly 50 to 10,000 kDa, and more preferably 100 to 1,000 kDa.

11. The device according to any of Claims 8 to 10, comprising:
- a plurality of channels each having a flow axis and a cross section orthogonal to the flow axis, the minimum dimension of said cross section being less than or equal to 200 µm and each channel being filled with a non-Newtonian liquid medium;
- means for applying a hydrodynamic flow in the channels; and
- means for applying an electric field in the channels.

12. The device according to any of Claims 8 to 11, wherein the channel is a lumen of a capillary tube; or the plurality of channels are lumens of capillary tubes, preferably arranged in parallel.

13. The device according to any of Claims 8 to 12, comprising:
- an introduction zone (9) and a detection zone (8) in the channel (1), which zones are spaced along the flow axis (14);
- means for detecting the deformable objects which arrive in the detection zone (8);
and wherein, preferably, the introduction zone (9) of the channel (1) is formed by an intersection of the channel (1) with an additional channel (2), the device comprising means for bringing the deformable objects (3) into the additional channel (2), and means for displacing the deformable objects towards the intersection, which preferably comprise means for applying an electric field (11a, 11b) in the additional channel (2) and/or means for applying a hydrodynamic flow (12a, 12b) in the additional channel (2).

14. The device according to any of Claims 8 to 13, wherein:
- the minimum dimension of the channel (1) is less than or equal to 25 µm, or less than or equal to 15 µm, or less than or equal to 10 µm, or less than or equal to 5 µm, or less than or equal to 2 µm; and/or
- the ratio between the minimum dimension of the cross section and the dimension of the cross section in a direction orthogonal to that of the minimum dimension is less than or equal to 1/10, preferably less than or equal to 1/15, more particularly preferably less than or equal to 1/20; and/or
- the distance between the introduction zone (9) and the detection zone (8) of the channel (1) is from 500 µm to 20 cm, preferably from 1 mm to 10 cm, and more particularly preferably from 2 mm to 1 cm.

15. A lab-on-a-chip system comprising the separating device according to any of Claims 8 to 14, connected at the outlet of a chemical or biochemical reaction device and/or supplying means for collecting the separated deformable objects.
